# EUROPÄISCHE PATENTANMELDUNG

(11) **EP 0 803 544 A2**
(43) Veröffentlichungstag der Anmeldung: **29.10.1997**
(21) Anmeldenummer: 97106119.7
(22) Anmeldetag: 15.04.1997
(51) Int. Cl.: C09B 67/08, C09B 48/00, C09B 19/02

(54) **Oberflächenbehandelte Chinacridon- und Dioxazin-Pigmente**

(30) Priorität: 24.04.1996 DE 19616364
(71) Anmelder: HOECHST AKTIENGESELLSCHAFT, 65929 Frankfurt am Main (DE)
(72) Erfinder: Urban, Manfred, 65205 Wiesbaden (DE); Schnaitmann, Dieter, Dr., 65817 Eppstein (DE)

(57) **Zusammenfassung**

Verwendung von Schwefelsäurehalbestern der allgemeinen Formeln (I) und (II)

R¹-O-(CH₂O)ₙ-SO₃⁻ M⁺ (I)

R¹-CO-NR²-(CH₂O)₍ₙ₊₁₎-SO₃⁻ M⁺ (II)

in welchen
- R¹: eine geradkettige oder verzweigte Alkylgruppe mit 10 bis 24 C-Atomen,
- R²: ein Wasserstoffatom oder eine C₁-C₆-Alkylgruppe darstellt,
- M⁺: ein Wasserstoff-, Alkali-, ½ Erdalkalimetall- oder Ammoniumion der Formel N⁺R³R⁴R⁵R⁶ bedeutet, wobei die Substituenten R³, R⁴, R⁵ und R⁶ unabhängig voneinander jeweils Wasserstoffatome oder C₁-C₆-Alkylgruppen sind, worin die Alkylgruppen durch 1 bis 3 Hydroxygruppen substituiert sein können, und
- n: eine Zahl von 0 bis 4 ist; oder einer Mischung aus mindestens zwei Schwefelsäurehalbestern der Formeln (I) und/oder (II)
zur Herstellung von oberflächenbehandelten Pigmenten aus der Klasse der Chinacridone und Dioxazine.

## Beschreibung

Gegenstand der vorliegenden Erfindung sind oberflächenbehandelte Pigmente auf Basis von Chinacridon- und Dioxazinpigmenten sowie deren Verwendung in wäßrigen und nichtwäßrigen Systemen.

Bei der Einarbeitung von Pigmenten in hochmolekulare Materialien besteht oftmals das Problem, daß in einigen Anwendungsmedien die Dispergierung unvollständig bleibt und die optimale Farbstärke nicht erreicht wird oder daß Schwierigkeiten bei der Verarbeitung der pigmentierten Systeme auftreten. Um die Einarbeitung von Pigmenten in die Anwendungsmedien zu erleichtern, werden die Pigmente meist mit oberflächenaktiven Mitteln (Tensiden) behandelt. Diese oberflächenaktiven Mittel belegen die Pigmentoberfläche in solcher Weise, daß beim Trocknen und Mahlen der Pigmente die Agglomeration weitgehend verhindert wird und auch nach längerer Lagerung gebrauchsfähige Pigmente mit leichter Verteilbarkeit, hoher Farbstärke und guten rheologischen Eigenschaften erhalten werden. Dabei werden an die oberflächenaktiven Mittel hohe Anforderungen gestellt, insbesondere wenn die Pigmente in wäßrigen und nichtwäßrigen Systemen eingesetzt werden.
So zeigen einige oberflächenbehandelte Pigmente nach der Einarbeitung in einen Offsetdruckfirnis bei der Verarbeitung im Offsetdruck starkes Tonen, wodurch die Verwendung dieser Pigmente in diesem wichtigen Druckverfahren nicht mehr möglich ist. Unter Tonen versteht man das Anfärben an den Stellen des Trägermaterials, die nicht angefärbt werden sollen. Hierzu werden die nichtdruckenden Stellen ständig mit einer Feuchtwalze benetzt, damit die Druckfarbe nicht auf diese Stellen übertragen wird. Verantwortlich für die Übertragung der Druckfarbe auf die benetzten Stellen sind die in den Pigmenten enthaltenen oberflächenaktiven Mittel, durch deren Netzwirkung sich die Wasseraffinität der Druckfarbe soweit erhöht, daß die Übertragung auf die benetzten Stellen ermöglicht wird.

Es ist bekannt, daß man Pigmente mit oberflächenaktiven Mitteln behandeln kann, um ihre anwendungstechnischen Eigenschaften zu verbessern. Um dies zu erreichen, werden gemäß der DE-A-2 152 485 die Pigmente mit einer alkalischen Lösung eines Alkylarylsulfonats oder Alkylphenolpolyglykolethersulfats behandelt, anschließend angesäuert und isoliert. Die dabei erhaltenen Pigmente sind nur zum Pigmentieren von Lacken und Anstrichfarben geeignet, so daß ihre Verwendung deutlich eingeschränkt ist. Darüberhinaus ist die Verwendung von oberflächenaktiven Mitteln auf phenolischer Basis für einige Einsatzgebiete aus ökologischen Gründen nicht mehr akzeptabel.

Als Zusatz zur Verbesserung der anwendungstechnischen Eigenschaften von Perylenpigmenten wird eine Reihe von oberflächenaktiven Mitteln, wie auch Fettalkoholpolyglykolethersulfate, vorgeschlagen. Die Anwendung der erhaltenen Perylenpigmente beschränkt sich jedoch auf das Lackgebiet. Die EP-A-0 088 392 beschreibt die Herstellung von Perylentetracarbonsäure-N,N'-dimethylimidpigmenten. Bei der Herstellung dieser Pigmente werden als oberflächenaktive Mittel bevorzugt Harzseifen und quarternäre Ammoniumsalze eingesetzt. Hierbei werden transparente Pigmente erhalten, die bevorzugt in Metalliclacken eingesetzt werden. Beim Einsatz von Fettalkoholpolyglykolethersulfaten werden deckende Pigmente erhalten, die jedoch für den Einsatz in Metallic-Lacken nicht geeignet sind.

Nach den Angaben der US-PS 4 617 403 wird vorgeschlagen, zur Verbesserung der anwendungstechnischen Eigenschaften von Tetrachlorthioindigopigmenten eine Reihe von oberflächenaktiven Mitteln, wie Fettalkoholpolyglykolethersulfate, zu verwenden. Bevorzugt werden Harzseifen eingesetzt. Die Anwendung der erhaltenen Tetrachlorthioindigopigmente beschränkt sich jedoch auf das Lack- und Kunststoffgebiet.

In der EP-A 0 662 497 wird beschrieben, daß durch den Zusatz von oberflächenaktiven Mitteln aus der Reihe der Fettsäuretauride Pigmente erhalten werden, die in allen gängigen Systemen eingesetzt werden können. Auch diese Pigmente genügen nicht allen Anforderungen, da sie im Offsetdruck starkes Tonen zeigen. Dadurch ist ihr universeller Einsatz sehr stark eingeschränkt.

Bislang werden bei Chinacridon- und Dioxazinpigmenten durch den Zusatz von oberflächenaktiven Mitteln geeignete Pigmente nur für bestimmte Anwendungsgebiete erhalten. Der Einsatz eines einzigen oberflächenaktiven Mittels für verschiedene Anwendungsgebiete war bislang nicht erfolgreich. Es bestand das Bedürfnis, leicht dispergierbare, toxikologisch unbedenkliche oberflächenbehandelte Pigmente der genannten Art herzustellen, die in allen gängigen Anwendungsgebieten leicht dispergierbar, flockungsstabil und verträglich sind.

Es wurde gefunden, daß die genannte Aufgabe überraschenderweise durch Verwendung eines oder mehrerer oberflächenaktiver Mittel aus der Reihe der Schwefelsäurehalbester gelöst werden kann.

Gegenstand der vorliegenden Erfindung ist die Verwendung von Schwefelsäurehalbestern der allgemeinen Formeln (I) und (II)

R¹-O-(CH₂O)ₙ-SO₃⁻ M⁺ (I)

R¹-CO-NR²-(CH₂O)₍ₙ₊₁₎-SO₃⁻ M⁺ (II)

in welchen
- R¹: eine geradkettige oder verzweigte Alkylgruppe mit 10 bis 24 C-Atomen, bevorzugt 10 bis 16 C-Atomen,
- R²: ein Wasserstoffatom oder eine C₁-C₆-Alkylgruppe,
- M⁺: ein Wasserstoff-, Alkali-, ½ Erdalkalimetall- oder ein Ammoniumion der Formel N^{**+**}R³R⁴R⁵R⁶ bedeutet, wobei die Substituenten R³, R⁴, R⁵ und R⁶ unabhängig voneinander jeweils Wasserstoffatome oder C₁-C₆-Alkylgruppen sind, worin die Alkylgruppen durch 1 bis 3 Hydroxygruppen substituiert sein können, und
- n: eine Zahl von 0 bis 4, vorzugsweise von 2 bis 3, ist;
oder einer Mischung aus mindestens zwei Schwefelsäurehalbestern der Formeln (I) und/oder (II),
zur Herstellung von oberflächenbehandelten Pigmenten aus der Klasse der Chinacridone und Dioxazine.

Als Schwefelsäurehalbester für die erfindungsgemäße Verwendung sind insbesondere solche von Interesse, deren Fettsäurerest R¹ 12 bis 14 Kohlenstoffatome hat sowie eine Mischung solcher Schwefelsäurehalbester.

Die erfindungsgemäß oberflächenbeschichteten Pigmente aus der Klasse der Dioxazine sind beispielsweise C.I. Pigment Violet 23 (C.I. No. 51 319) der Formel III 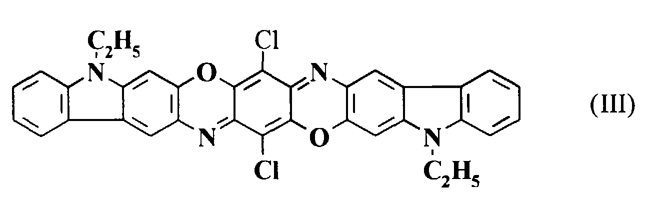 und C.I. Pigment Violet 37 (C.I. No. 51 345) der Formel IV 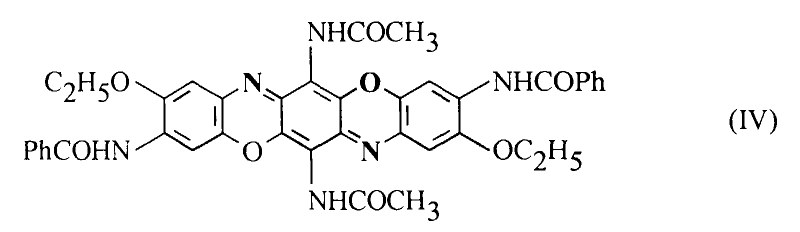 worin Ph die Bedeutung Phenyl hat.

Die erfindungsgemäß oberflächenbeschichteten Pigmente aus der Klasse der Chinacridone sind beispielsweise C.I. Pigment Violet 19 (C.I. No. 46 500) der Formel V 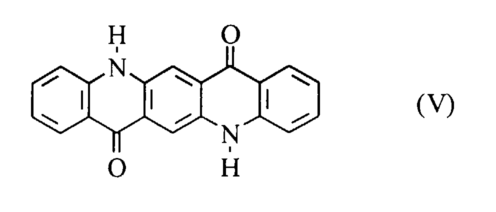 das in der β-Phase oder γ-Phase vorliegen kann, sowie 2,9-Dimethylchinacridon, 1,8-Dichlorchinacridon, 2,9-Dichlorchinacridon, 3,10-Dichlorchinacridon und 2,9-Di-N-methylcarbonamidochinacridon.

Die Aufbringung der Schwefelsäurehalbester auf die Oberfläche der Pigmentteilchen kann bei verschiedenen Verfahrensstufen der Pigmentherstellung erfolgen.

Im Falle von Dioxazinpigmenten müssen bei der Pigmentherstellung die bei der Synthese in organischen aromatischen Lösemitteln gemäß BIOS Final Report 960, Seite 75, grobkristallin anfallenden Rohpigmente in die Pigmentform überführt werden. Dies wird erreicht durch einen Feinverteilungsprozeß und nachfolgendem Finish. Feinverteilungsprozesse sind beispielsweise Naß- und Trockenmahlungen, Lösen oder Suspendieren in konzentrierten Säuren und nachträgliches Austragen in Wasser. Finishverfahren sind beispielsweise die Nachbehandlung der feinverteilten Rohpigmente, Präpigmente genannt, mit Wasser, organischen Lösemitteln, Säuren oder Laugen, mit oder ohne Zusatz von oberflächenaktiven Mitteln, mit oder ohne Zusatz von Pigmentdispergatoren und/oder Temperaturbehandlung.

Bei der Herstellung von Chinacridonpigmenten kann die Feinverteilung gemäß der DE-A-1 150 046 direkt bei der Synthese erreicht werden. Die nach der Feinverteilung vorliegenden feinteiligen Präpigmente sind noch nicht für den direkten Einsatz geeignet, sondern müssen noch einer Finishbehandlung unterzogen werden.

Die Schwefelsäurehalbester der Formel (I) und/oder (II) können vor, während oder nach dem Finish zugegeben werden. Es ist auch möglich, die Schwefelsäurehalbester schon während der Feinverteilung oder erst dem isolierten, feuchten Pigment zuzusetzen. Vorzugsweise erfolgt die Zugabe der Schwefelsäurehalbester unmittelbar vor oder nach dem Finish.

Bevorzugt wird so verfahren, daß man die ein- bis dreifache Menge Lösemittel, bezogen auf das Pigment, vorlegt und dieses durch Säurezugabe auf einen pH zwischen 2 und 5 ansäuert, bevorzugt mit Ameisensäure, Essigsäure oder Propionsäure. Als Lösemittel kommen zweckmäßigerweise die nachfolgend genannten, für den Finish verwendeten Lösemittel in Betracht. In diese Mischung wird der Schwefelsäurehalbester, bevorzugt in Form eines Salzes, eingetragen und gelöst. Danach wird ein Präpigment, wie es z.B. nach den Angaben der DE-A-2 742 575 erhalten wird, eingetragen und verrührt. Nach Zugabe der 5- bis 10fachen Gewichtsmenge Wasser wird bei Temperaturen von 50 bis 150 °C 1 bis 5 Stunden gerührt. Anschließend wird das Lösemittel abdestilliert und das Pigment in der üblichen Weise isoliert.

Ferner ist es möglich, die Schwefelsäurehalbester in fester Form oder als wäßrige oder wäßrig-alkalische Lösung dem bereits gefinishten Pigment zuzusetzen.

Man kann auch so verfahren, daß man die nach dem Finish und nach dem Abtrennen des Lösemittels vorliegenden wäßrigen Pigmentsuspensionen mit einer wäßrigen oder wäßrig-alkalischen Lösung eines Schwefelsäurehalbesters versetzt und die Mischung bei Temperaturen von 50 bis 100 °C nachbehandelt. Anschließend wird das Pigment direkt oder nach Einstellung auf einen pH-Wert von 5 bis 7 in üblicher Weise isoliert.

Als Lösemittel für den Finish kommen beispielsweise in Frage: Alicyclische Kohlenwasserstoffe wie z.B. Cyclohexan; C₁-C₈-Alkanole und alicyclische Alkohole wie z.B. Methanol, Ethanol, n- oder Isopropanol, n- oder Isobutanol, tert. Butanol, Pentanole, Hexanole, Cyclohexanol; C₁-C₅-Dialkyl- oder cyclische Ketone wie z.B. Aceton, Diethylketon, Methylisobutylketon, Methylethylketon oder Cyclohexanon; Ether und Glykolether wie z.B. der Monomethyl- oder Monoethylether des Ethylen- oder Propylenglykols, Butylglykol, Ethyldiglykol oder Methoxybutanol; aromatische Kohlenwasserstoffe wie z.B. Toluol, Xylole oder Ethylbenzol, cyclische Ether wie z.B. Tetrahydrofuran, aromatische Chlorkohlenwasserstoffe wie z.B. Chlorbenzol, o-Dichlorbenzol, 1,2,4-Trichlorbenzol oder Brombenzol; substituierte Aromaten wie z.B. Benzoesäure, Nitrobenzol oder Phenol; aliphatische Carbonsäureamide wie z.B. Formamid oder Dimethylformamid; cyclische Carbonsäureamide, wie z.B. N-Methylpyrrolidon; Carbonsäure-C₁-C₄-alkylester, wie z.B. Ameisensäurebutylester, Essigsäureethylester oder Propionsäurepropylester; Carbonsäure-C₁-C₄-glykolester, Phthalsäure- und Benzoesäure-C₁-C₄-alkylester wie z.B. Benzoesäureethylester; heterocyclische Basen wie z.B. Pyridin, Morpholin oder Picolin; sowie Dimethylsulfoxid und Sulfolan. Bevorzugte organische Lösemittel sind Alkanole, insbesondere Ethanol, Propanole, Butanole und Pentanole; aliphatische Carbonsäureamide wie Formamid oder Dimethylformamid; cyclische Carbonsäureamide, insbesondere N-Methylpyrrolidon; C₁-C₅-Dialkyl- oder cyclische Ketone, insbesondere Aceton, Diethylketon, Methylisobutylketon, Methylethylketon oder Cyclohexanon.

Die Schwefelsäurehalbester werden zweckmäßigerweise in einer Menge von 0,1 bis 5 Gew.-%, vorzugsweise 0,5 bis 2,5 Gew.-%, bezogen auf trockenes Pigment, zugesetzt. Dabei entstehen Pigmentpräparationen, die dadurch gekennzeichnet sind, daß die Oberfläche der Pigmentteilchen mit dem besagten Schwefelsäurehalbester vollständig oder teilweise beschichtet ist.

Außer den Schwefelsäurehalbestern können noch Pigmentdispergatoren zugesetzt werden. Beim Zusatz von Pigmentdispergatoren werden Pigmentzubereitungen erhalten. Pigmentdispergatoren, die in Kombination mit den Schwefelsäurehalbestern eingesetzt werden können, sind bevorzugt solche mit der allgemeinen Formel (VI),

P - [X]ₘ (VI)

in welcher
- P: für einen m-wertigen Rest eines Pigments auf Basis eines Chinacridons oder Dioxazins, im Falle eines Chinacridons, vorzugsweise C.I. Pigment Violet 19 und im Falle eines Dioxazins, vorzugsweise C.I. Pigment Violet 23, steht,
- m: eine Zahl von 1 bis 4 ist, und
- X: eine Gruppe der Formel (VII) 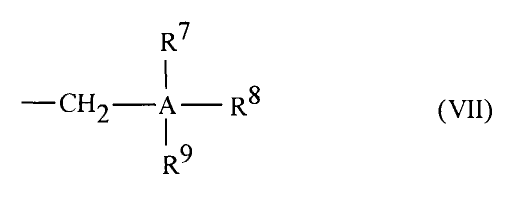 darstellt, worin A einen fünf- oder sechsgliedrigen aromatischen, gegebenenfalls kondensierten Heterocyclus darstellt, welcher 1 bis 3 gleiche oder unterschiedliche Heteroatome aus der Reihe Stickstoff, Sauerstoff und/oder Schwefel enthält, vorzugsweise Imidazolyl oder Indolyl, und der Heterocyclus über ein Kohlenstoffatom an die Methylengruppe gebunden ist, R⁷ und R⁸ ein Wasserstoffatom, eine C₁-C₄-Alkyl-, eine C₂-C₄-Alkenyl- oder eine Arylgruppe, vorzugsweise Phenylgruppe, bedeutet, wobei R⁷ und R⁸ gemeinsam auch einen aliphatischen oder aromatischen Ring bilden können, R⁹ ein Wasserstoffatom, eine C₁-C₄-Alkyl-, eine C₁-C₃-Hydroxyalkyl- oder eine C₂-C₄-Alkenylgruppe bedeutet, oder worin
- X: eine Gruppe der Formel (VIII) 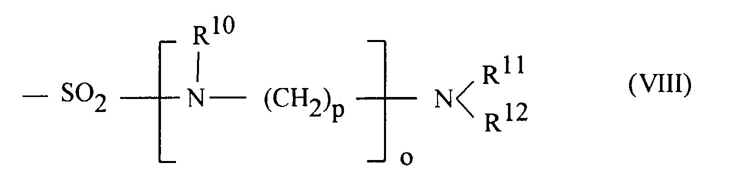 darstellt, worin R¹¹ und R¹² unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R¹¹ und R¹² gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff und/oder Schwefel, vorzugsweise Morpholinyl oder Pyrrolidinyl, R¹⁰ ein Wasserstoffatom oder eine C₁-C₄-Alkylgruppe ist, p eine Zahl von 1 bis 6, und o die Zahl 1 oder 2 ist.

Die genannten Pigmentdispergatoren werden zweckmäßigerweise in einer Menge von 0 bis 10 Gew.-%, vorzugsweise 0,5 bis 5 Gew.-%, bezogen auf das Basispigment, zugesetzt. Die Zugabe der Pigmentdispergatoren kann bei der Feinverteilung, vor, während oder nach dem Finish, oder zum isolierten, feuchten Pigment erfolgen.

Gegenstand der vorliegenden Erfindung ist auch eine Pigmentpräparation oder eine Pigmentzubereitung, bestehend im wesentlichen aus
a) einem Pigment aus der Klasse der Chinacridone oder Dioxazine,
b) einem oder mehreren Schwefelsäurehalbestern der allgemeinen Formeln (I) und/oder (II),
c) und gegebenenfalls einem Pigmentdispergator der allgemeinen Formel (VI).

Bevorzugt ist eine Pigmentpräparation oder eine Pigmentzubereitung, bestehend im wesentlichen aus
a) 90 bis 99,9 Gew.-%, vorzugsweise 99,5 bis 90 Gew.-%, eines Pigments aus der Klasse der Chinacridone oder Dioxazine,
b) 0,1 bis 5 Gew.-%, vorzugsweise 0,5 bis 2,5 Gew.-%, eines oder mehrerer Schwefelsäurehalbester der allgemeinen Formeln (I) und/oder (II), und
c) 0 bis 9,9 Gew.-%, vorzugsweise 0,5 bis 5 Gew.-%, eines Pigmentdispergators der allgemeinen Formel (VI).

Besonders bevorzugt sind Pigmentpräparationen oder -zubereitungen, wie vorstehend beschrieben, enthaltend als Pigment C.I. Pigment Violet 23, C.I. Pigment Violet 37, C.I. Pigment Violet 19, 2,9-Dimethylchinacridon, 1,8-Dichlorchinacridon, 2,9-Dichlorchinacridon, 3,10-Dichlorchinacridon oder 2,9-Di-N-methylcarbonamidchinacridon. Ganz besonders bevorzugt sind C.I. Pigment Violet 19 und C.I. Pigment Violet 23.

Gegenstand der vorliegenden Erfindung ist auch ein Verfahren zur Herstellung einer Pigmentpräparation oder Pigmentzubereitung, dadurch gekennzeichnet, daß man einen oder mehrere Schwefelsäurehalbester der Formel (I) und/oder (II) in einer Menge von 0,1 bis 5 Gew.-%, bezogen auf trockenes Pigment, und 0 bis 9,9 Gew.-% eines Pigmentdispergators der allgemeinen Formel (VI) zugibt.

Die erfindungsgemäßen oberflächenbehandelten Pigmente sind durch den Zusatz der Schwefelsäurehalbester den unbehandelten Pigmenten in ihren coloristischen und rheologischen Eigenschaften deutlich überlegen. Es war überraschend und nicht vorhersehbar, daß bei den durch Zusatz von Schwefelsäurehalbestern erhaltenen Pigmenten gegenüber den mit Fettsäuretauriden hergestellten Pigmenten im Offsetdruck kein Tonen auftritt, obwohl die Netzwirkung der Schwefelsäurehalbester deutlich größer ist als die der Fettsäuretauride. Dadurch wird der Anwendungsbereich dieser Pigmente wesentlich erweitert, und auf die Entwicklung mehrerer Pigmenttypen des gleichen Basispigments für verschiedene Anwendungsgebiete kann verzichtet werden.

Die Herstellung von Chinacridon- und Dioxazinpigmenten nach dem erfindungsgemäßen Verfahren hat sich als besonders wirtschaftlich und umweltfreundlich erwiesen. Die Herstellung der oberflächenbehandelten Pigmente kann in einfacher Weise direkt bei der Pigmentherstellung durch Zusatz von geringen Mengen der Schwefelsäurehalbester bei der Feinverteilung oder beim Finish erfolgen, so daß ein zusätzlicher Verfahrensschritt nicht notwendig ist. Die Schwefelsäurehalbester bleiben bei üblicher Anwendung quantitativ auf dem Pigment. Es gelangen deshalb nur sehr geringe Mengen in das Abwasser. Diese geringen Mengen werden aufgrund ihrer guten Abbaubarkeit durch eine biologische Abwasserreinigung vollständig entfernt. Außerdem werden nur geringe Mengen an Chemikalien und Lösemitteln eingesetzt, welche anschließend weiterverarbeitet oder wieder vollständig regeneriert werden können. Somit treten keine Entsorgungsprobleme auf. Die Kosten für die Lagerhaltung, Bereitstellung verschiedener Apparaturen und für den Vertrieb werden niedrig gehalten.

Die nach der vorliegenden Erfindung hergestellten oberflächenbehandelten Pigmente zeichnen sich aus durch ihre hervorragenden coloristischen und rheologischen Eigenschaften, sowie eine leichte Dispergierbarkeit und ein gutes Glanzverhalten bei der Applikation in verschiedenen Medien auf dem Lack-, Druck- und Kunststoffsektor sowie dem Textildruck.

Die erfindungsgemäß hergestellten oberflächenbehandelten Pigmente lassen sich zum Pigmentieren von hochmolekularen organischen Materialien natürlicher oder synthetischer Herkunft einsetzen.

Hochmolekulare organische Materialien, die mit den genannten oberflächenbehandelten Pigmenten pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen. Dabei spielt es keine Rolle, ob die erwähnten hochmolekularen organischen Verbindungen als plastische Massen, Schmelzen oder in Form von Spinnlösungen, Tonern, Lacken, Anstrichstoffen oder Druckfarben vorliegen. Je nach Verwendungszweck erweist es sich als vorteilhaft, die erfindungsgemäß erhaltenen Pigmente als Verschnitt oder in Form von Präparationen oder Dispersionen zu benutzen. Bezogen auf das zu pigmentierende, hochmolekulare organische Material setzt man die erfindungsgemäßen oberflächenbehandelten Pigmente oder Pigmentzubereitungen in einer Menge von vorzugsweise 0,1 bis 10 Gew.-% ein.

Besonders geeignet sind die erfindungsgemäßen oberflächenbehandelten Pigmente zur Anwendung in herkömmlichen Lacksystemen aus der Klasse der Alkydmelaminharzlacke und Zweikomponentenlacke auf Basis von mit Polyisocyanat vernetzbaren Alkyd- und Acrylharzen als auch in neuartigen, wäßrigen Lacken sowie in lösemittelarmen High-Solid-Lacken mit hohem Festkörperanteil.

Die erfindungsgemäß hergestellten oberflächenbehandelten Pigmente sind in vielen Anwendungsmedien leicht und bis zu hohen Feinheiten dispergierbar.

Mit ihnen lassen sich Lackierungen, Drucke und Massefärbungen von hoher Farbstärke, hohem Glanz und hoher Transparenz mit ausgezeichneten Echtheitseigenschaften erzielen.

Zur Beurteilung der Eigenschaften der nach der Erfindung hergestellten oberflächenbehandelten Pigmente auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein Polyesterlack (PE) auf Basis von Celluloseacetobutyrat und einem Melaminharz sowie ein wäßriger Lack auf Polyurethanbasis (PUR) ausgewählt.
Zur Beurteilung der Eigenschaften der nach der Erfindung erzeugten Pigmentpräparationen und Pigmentzubereitungen auf dem Kunststoffsektor wurde aus der Vielzahl der bekannten Kunststoffe Weichpolyvinylchlorid (PVC) ausgewählt.
Zur Beurteilung der Eigenschaften der nach der Erfindung erzeugten Pigmentpräparationen und Pigmentzubereitungen auf dem Drucksektor wurden aus der Vielzahl der bekannten Drucksysteme ein Tiefdrucksystem auf Nitrocellulosebasis (NC) und im Offsetdruck (OF) ein Drucksystem auf Alkydharzbasis ausgewählt.
Die Bestimmung der Farbstärke und des Farbtons erfolgte nach DIN 55986. Die Rheologie des Mahlguts nach der Dispergierung (Millbase- Rheologie) wurde anhand der folgenden fünfstufigen Skala bewertet:
5 dünnflüssig
4 flüssig
3 dickflüssig
2 leicht gestockt
1 gestockt

Nach dem Verdünnen des Mahlguts auf die Pigmentendkonzentration wurde die Viskosität mit dem Viskospatel nach Rossmann, Typ 301 der Firma Erichsen bestimmt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt, Wesel.

Die Bestimmung der Netzwerte (NW-Wert) der verwendeten Tenside erfolgte nach DIN 53901. Der Netzwert wird in Sekunden angegeben. Die Netzwirkung ist umso größer, je kleiner der NW-Wert ist.

Im vorangehenden Text und in den nachstehenden Beispielen beziehen sich Teile jeweils auf Gewichtsteile und Prozente jeweils auf Gewichtsprozente.

### Beispiel 1

In einem Rührgefäß werden 900 Teile Isobutanol (85 %ig) vorgelegt und 30 Teile Ameisensäure (98 %ig) zugegeben. Zu dieser Mischung werden 6,4 Teile einer wäßrigen Paste des Natriumsalzes eines Schwefelsäurehalbesters (Wirkstoffgehalt 70 %) der allgemeinen Formel (I) gegeben und gelöst. In dieser Formel (I) bedeutet R¹ einen synthetischen Alkylrest mit 12 bis 14 C-Atomen, n die Zahl 3 und M⁺ ein Natriumion (NW-Wert 75 s). Danach werden 600 Teile Präpigment von C.I. Pigment Violet 23, hergestellt gemäß der DE-A-2 742 575, Beispiel 2 oder der US-PS 4 253 839 Beispiel 2, welches 25 % Synthesesalz, vorwiegend Kochsalz, enthält, eingetragen und 20 Stunden bei 20 bis 25 °C gerührt. Während dieser Zeit werden noch 600 Teile Isobutanol (85 %ig) zugesetzt. Anschließend werden 3600 Teile Wasser zugegeben, 5 Stunden zum Sieden erhitzt und das Isobutanol durch Erhitzen bis auf 100 °C am Übergang azeotrop abdestilliert. Nach dem Abkühlen auf 60 °C wird das Pigment abgesaugt, mit Wasser neutral und salzfrei gewaschen und bei 80 °C getrocknet.

Man erhält 439,7 Teile einer Pigmentpräparation, die im AM-Lack transparente und farbstarke Lackierungen liefert. Die Rheologie wird mit 4 bis 5 bewertet.

Die Viskosität beträgt 5,5 s und die Glanzmessung ergibt den Wert 84.
Im PE-Lack werden transparente und farbstarke Lackierungen erhalten. Die Viskosität beträgt 2,3 s und die Glanzmessung ergibt den Wert 35.
Im PUR-Lack werden transparente und farbstarke Lackierungen erhalten. Die Viskosität beträgt 7,9 s.
Im NC-Druck werden transparente und farbstarke Drucke mit hohem Glanz erhalten. Im Offsetdruck werden Drucke mit hoher Transparenz und hoher Farbstärke erhalten. Die Fließfähigkeit der Druckfarbe ist sehr gut und die Viskosität ist niedrig. Beim Drucken tritt kein Tonen auf.

Wird der Versuch wiederholt, aber an Stelle des Schwefelsäurehalbesters 1 % eines Fettsäuretauridgemischs (NW-Wert 175) gemäß der EP-PA 0 662 497 verwendet, so tritt beim Drucken im Offsetdruck starkes Tonen auf.

### Beispiel 2

In einem Rührgefäß werden 900 Teile Isobutanol (85 %ig) vorgelegt und 30 Teile Ameisensäure (98 %ig) zugegeben. Zu dieser Mischung werden 11,25 Teile einer wäßrigen Paste des Ammoniumsalzes eines Schwefelsäurehalbesters (Wirkstoffgehalt 40 %) der allgemeinen Formel (II) gegeben und gelöst. In dieser Formel (II) bedeutet R¹ einen Alkylrest auf Basis einer natürlichen Cocosfettsäure mit 12 bis 14 C-Atomen, R² ein Wasserstoffatom, n die Zahl 0,6 und M⁺ ein Ammoniumion, in dem R³ ein Wasserstoffatom und R⁴, R⁵ und R⁶ jeweils eine Hydroxyethylgruppe bedeuten (NW-Wert 104 s). Danach werden 600 Teile Präpigment von C.I. Pigment Violet 23, hergestellt gemäß der DE-A-2 742 575, Beispiel 2 oder der US-PS 4 253 839 Beispiel 2, welches 25 % Synthesesalz, vorwiegend Kochsalz, enthält, eingetragen und 20 Stunden bei 20 bis 25 °C gerührt. Während dieser Zeit werden noch 600 Teile Isobutanol (85 %ig) zugesetzt. Anschließend werden 3600 Teile Wasser zugegeben, 5 Stunden zum Sieden erhitzt und das Isobutanol durch Erhitzen bis auf 100 °C am Übergang azeotrop abdestilliert. Nach dem Abkühlen auf 60 °C wird das Pigment abgesaugt, mit Wasser neutral und salzfrei gewaschen und bei 80 °C getrocknet.
Man erhält 438,2 Teile einer Pigmentpräparation, die im AM-Lack transparente und farbstarke Lackierungen liefert. Die Rheologie wird mit 4 bewertet. Die Viskosität beträgt 5,3 s und die Glanzmessung ergibt den Wert 85. Im PE-Lack werden transparente und farbstarke Lackierungen erhalten. Die Viskosität beträgt 2,0 s und die Glanzmessung ergibt den Wert 33. Im PUR-Lack werden transparente und farbstarke Lackierungen erhalten. Die Viskosität beträgt 8,5 s. Im NC-Druck werden transparente und farbstarke Drucke mit hohem Glanz erhalten. Im Offsetdruck werden Drucke mit hoher Transparenz und hoher Farbstärke erhalten. Die Fließfähigkeit der Druckfarbe ist sehr gut und die Viskosität niedrig. Beim Drucken tritt kein Tonen auf.

Wird ein Pigment analog Beispiel 2, jedoch ohne Zusatz des Schwefelsäurehalbesters hergestellt, so ist dieses Pigment dem oberflächenbehandelten Pigment coloristisch deutlich unterlegen.

### Beispiel 3

In einem Rührgefäß werden 225 Teile Isobutanol (85 %ig) vorgelegt und 7,5 Teile Ameisensäure (98 %ig) zugegeben. Zu dieser Mischung werden 1,88 Teile einer wäßrigen Paste des Natriumsalzes eines Schwefelsäurehalbesters (Wirkstoffgehalt 60 %) der allgemeinen Formel (I) gegeben und gelöst. In dieser Formel (I) bedeutet R¹ einen Alkylrest auf Basis einer natürlichen Fettsäure mit 12 bis 14 C-Atomen, n die Zahl 2 und M⁺ ein Natriumion (NW-Wert 55 s). Danach werden 150 Teile Präpigment von C.I. Pigment Violet 23, hergestellt gemäß der DE-A-2 742 575, Beispiel 2 oder der US-PS 4 253 839 Beispiel 2, welches 25 % Synthesesalz, vorwiegend Kochsalz, enthält, eingetragen und 20 Stunden bei 20 bis 25 °C gerührt. Während dieser Zeit werden noch 150 Teile Isobutanol (85 %ig) zugesetzt. Anschließend werden 900 Teile Wasser zugegeben, 5 Stunden zum Sieden erhitzt und das Isobutanol durch Erhitzen bis auf 100 °C am Übergang azeotrop abdestilliert. Nach dem Abkühlen auf 60 °C wird das Pigment abgesaugt, mit Wasser neutral und salzfrei gewaschen und bei 80 °C getrocknet.
Man erhält 110,5 Teile einer Pigmentpräparation, die im AM-Lack transparente und farbstarke Lackierungen liefert. Im Nitrocellulosetiefdruck und im Offsetdruck werden farbstarke und glänzende Drucke erhalten.

### Beispiel 4

In einem Rührgefäß werden 225 Teile Isobutanol (85 %ig) vorgelegt und 7,5 Teile Ameisensäure (98 %ig) zugegeben. Zu dieser Mischung werden 2,8 Teile des Ammoniumsalzes eines Schwefelsäurehalbesters der allgemeinen Formel (I) gegeben und gelöst. In dieser Formel (I) bedeutet R¹ einen Alkylrest auf Basis einer synthetischen Fettsäure mit 12 bis 14 C-Atomen, n die Zahl 0 und M⁺ ein Ammoniumion , in dem R³ ein Wasserstoffatom und R⁴, R⁵ und R⁶ jeweils eine Hydroxyethylgruppe bedeuten (NW-Wert 115 s). Danach werden 150 Teile Präpigment von C.I. Pigment Violet 23, hergestellt gemäß der DE-A-2 742 575, Beispiel 2 oder der US-PS 4 253 839 Beispiel 2, welches 25 % Synthesesalz, vorwiegend Kochsalz, enthält, eingetragen und 20 Stunden bei 20 bis 25 °C gerührt. Während dieser Zeit werden noch 150 Teile Isobutanol (85 %ig) zugesetzt. Anschließend werden 900 Teile Wasser zugegeben,
5 Stunden zum Sieden erhitzt und das Isobutanol durch Erhitzen bis auf 100 °C am Übergang azeotrop abdestilliert. Nach dem Abkühlen auf 60 °C wird das Pigment abgesaugt, mit Wasser neutral und salzfrei gewaschen und bei 80 °C getrocknet.
Man erhält 111,0 Teile einer Pigmentpräparation, die im AM-Lack transparente und farbstarke Lackierungen liefert. Im Nitrocellulosetiefdruck und im Offsetdruck werden farbstarke und glänzende Drucke erhalten.

### Beispiel 5

In einem Rührgefäß werden 225 Teile Isobutanol (85 %ig) vorgelegt und 7,5 Teile Ameisensäure (98 %ig) zugegeben. Zu dieser Mischung werden 4,0 Teile einer wäßrigen Paste des Natriumsalzes eines Schwefelsäurehalbesters (Wirkstoffgehalt 70 %) der allgemeinen Formel (I) gegeben und gelöst. In dieser Formel (I) bedeutet R¹ einen synthetischen Alkylrest mit 12 bis 14 C-Atomen, n die Zahl 3 und M⁺ ein Natriumion (NW-Wert 75 s). Danach werden 150 Teile Präpigment von C.I. Pigment Violet 23, hergestellt gemäß der DE-A-2 742 575, Beispiel 2 oder der US-PS 4 253 839 Beispiel 2, welches 25 % Synthesesalz, vorwiegend Kochsalz, enthält, eingetragen und 20 Stunden bei 20 bis 25 °C gerührt. Während dieser Zeit werden noch 150 Teile Isobutanol (85 %ig) zugesetzt. Anschließend werden 900 Teile Wasser zugegeben, 5 Stunden zum Sieden erhitzt und das Isobutanol durch Erhitzen auf 100 °C am Übergang azeotrop abdestilliert. Nach dem Abkühlen auf 60 °C wird das Pigment abgesaugt, mit Wasser neutral und salzfrei gewaschen und bei 80 °C getrocknet.
Man erhält 111,9 Teile einer Pigmentpräparation, die im AM-Lack transparente und farbstarke Lackierungen liefert. Die Rheologie wird mit 5 bewertet. Die Viskosität beträgt 5,5 s und die Glanzmessung ergibt den Wert 84. Im NC-Druck werden transparente und farbstarke Drucke mit hohem Glanz erhalten.

### Beispiel 6

In eine Rührwerkskugelmühle mit einer in der DE-PS 3 716 587 beschriebenen Ausführungsform, die mit 35,5 Teilen Zirkonmischoxidperlen vom Durchmesser 0,3-0,4 mm als Mahlkörper gefüllt ist, wird eine Suspension, bestehend aus 250 Teilen Wasser, 2,4 Teilen Natriumhydroxid (98 %ig) und 30 Teilen Rohpigment von C.I. Pigment Violet 23 (salzfrei) mit 1000 Teilen pro Stunde eindosiert und mit einer Rührwerksumfangsgeschwindigkeit von 15,6 m/s sowie einer spezifischen Leistungsdichte von 3,1 kW pro Liter Mahlraum während 6 Stunden im Kreislauf bei 50 bis 55 °C gemahlen. Anschließend wird die Mahlgutsuspension durch Zugabe von 3,5 Teilen Ameisensäure (98 %ig) auf pH 3 bis 4 eingestellt. Danach werden 90 Teile Isobutanol (100 %ig) zudosiert und 2,68 Teile einer wäßrigen Lösung des Natriumsalzes eines Schwefelsäurehalbesters (Wirkstoffgehalt 28 %) der allgemeinen Formel (I) zugegeben und gelöst. In dieser Formel (I) bedeutet R¹ einen synthetischen Alkylrest mit 12 bis 14 C-Atomen, n die Zahl 3 und M⁺ ein Natriumion (NW-Wert 75 s). Es wird 5 Stunden bei Siedetemperatur gerührt und danach das Isobutanol durch Erhitzen bis auf 100 °C am Übergang azeotrop abdestilliert. Nach dem Abkühlen auf 60 °C wird eine Suspension aus 150 Teilen Wasser und 6,9 Teilen Pigmentdispergator der allgemeinen Formel (VI) als 21,7 %iger wasserfeuchter Preßkuchen hinzugefügt. In dieser Formel (VI) bedeutet P die Molekülstruktur von C.I. Pigment Violet 23 und X die Gruppe der Formel (VII), worin A der Imidazolylrest, R⁷ eine Methylgruppe, R⁸ und R⁹ je ein Wasserstoffatom und m die Zahl 1 ist (Dieser Pigmentdispergator enthält noch ca. 50% unsubstituiertes C.I. Pigment Violet 23). Es wird 1 Stunde bei 60 °C gerührt. Danach wird die Pigmentzubereitung abgesaugt, mit Wasser neutral und salzfrei gewaschen und bei 80 °C getrocknet.
Man erhält 32,5 Teile Pigmentzubereitung, die im NC-Druck farbstarke und hochglänzende Drucke liefert. Die Viskosität und der Lösemittelverbrauch zur Einstellung der druckfähigen Farbe sind sehr niedrig.

### Beispiel 7

In einem Rührgefäß werden 600 Teile Isobutanol (85 %ig) vorgelegt und 20 Teile Ameisensäure (98 %ig) zugegeben. Danach werden 400 Teile Präpigment von C.I. Pigment Violet 23, hergestellt gemäß der DE-A-2 742 575, Beispiel 2 oder der US-PS 4 253 839 Beispiel 2, welches 25 % Synthesesalz, vorwiegend Kochsalz, enthält, eingetragen und 20 Stunden bei 20 bis 25 °C gerührt. Während dieser Zeit werden noch 400 Teile Isobutanol (85 %ig) zugesetzt. Anschließend werden 2400 Teile Wasser zugegeben, 5 Stunden zum Sieden erhitzt und das Isobutanol durch Erhitzen bis auf 100 °C am Übergang azeotrop abdestilliert. Nach dem Abkühlen auf 60 °C werden 10,7 Teile einer wäßrigen Lösung des Natriumsalzes eines Schwefelsäurehalbesters (Wirkstoffgehalt 28 %) der allgemeinen Formel (I) zugegeben. In dieser Formel (I) bedeutet R¹ einen synthetischen Alkylrest mit 12 bis 14 C-Atomen, n die Zahl 3 und M⁺ ein Natriumion (NW-Wert 75 s). Es wird 1 Stunde bei 60 °C gerührt, danach das Pigment abgesaugt, mit Wasser neutral und salzfrei gewaschen und bei 80 °C getrocknet.
Man erhält 239 Teile einer Pigmentpräparation, die im AM-Lack transparente und farbstarke Lackierungen liefert. Die Rheologie wird mit 5 bewertet. Die Viskosität beträgt 5,1 s und die Glanzmessung ergibt den Wert 81. Das Pigment läßt sich leicht in wäßrige und in nichtwäßrige Präparationen einarbeiten. Diese Präparationen besitzen sehr gute coloristische und rheologische Eigenschaften.

### Beispiel 8

In einem Rührgefäß werden 100 Teile Isobutanol (85 %ig) vorgelegt und 3,5 Teile Ameisensäure (98 %ig) zugegeben. Danach werden 66,7 Teile Präpigment von C.I. Pigment Violet 23, hergestellt gemäß der DE-A-2 742 575, Beispiel 2 oder der US-PS 4 253 839 Beispiel 2, welches 25 % Synthesesalz, vorwiegend Kochsalz, enthält, eingetragen und 20 Stunden bei 20 bis 25 °C gerührt. Während dieser Zeit werden noch 66,7 Teile Isobutanol (85 %ig) zugesetzt. Anschließend werden 400 Teile Wasser zugegeben, 5 Stunden zum Sieden erhitzt und das Isobutanol durch Erhitzen bis auf 100 °C am Übergang azeotrop abdestilliert. Nach dem Abkühlen auf 60 °C werden 1,8 Teile einer wäßrigen Lösung des Natriumsalzes eines Schwefelsäurehalbesters (Wirkstoffgehalt 28 %) der allgemeinen Formel (I) zugegeben. In dieser Formel (I) bedeutet R¹ einen synthetischen Alkylrest mit 12 bis 14 C-Atomen, n die Zahl 3 und M⁺ ein Natriumion (NW-Wert 75 s). Danach wird durch Zugabe von 7,0 Teilen Natronlauge 10 %ig der pH-Wert auf 6 bis 7 gestellt, 1 Stunde bei 60°C gerührt und dann das Pigment abgesaugt, mit Wasser neutral und salzfrei gewaschen und bei 80 °C getrocknet.
Man erhält 49,0 Teile einer Pigmentpräparation, die im AM-Lack transparente und farbstarke Lackierungen liefert. Die Rheologie wird mit 5 bewertet. Die Viskosität beträgt 4,9 s und die Glanzmessung ergibt den Wert 83. Im PE-Lack werden transparente und farbstarke Lackierungen erhalten. Die Viskosität beträgt 2,6 s und die Rheologie wird mit 3 bewertet. Im PUR-Lack werden transparente und farbstarke Lackierungen erhalten. Die Viskosität beträgt 7,9 s und die Rheologie wird mit 3 bewertet.

### Beispiel 9

In einem Rührgefäß werden 270 Teile Isobutanol (85 %ig) vorgelegt und 9,0 Teile Ameisensäure (98 %ig) zugegeben. Danach werden 180 Teile Präpigment von C.I. Pigment Violet 23, hergestellt gemäß der DE-A-2 742 575, Beispiel 2 oder der US-PS 4 253 839 Beispiel 2, welches 25 % Synthesesalz, vorwiegend Kochsalz, enthält, eingetragen und 20 Stunden bei 20 bis 25 °C gerührt. Während dieser Zeit werden noch 180 Teile Isobutanol (85 %ig) zugesetzt. Anschließend werden 1080 Teile Wasser zugegeben, 3 Stunden zum Sieden erhitzt und das Isobutanol durch Erhitzen bis auf 100 °C am Übergang azeotrop abdestilliert. Nach dem Abkühlen auf 60 °C werden 2,4 Teile einer wäßrigen Lösung des Natriumsalzes eines Schwefelsäurehalbesters (Wirkstoffgehalt 28 %) der allgemeinen Formel (I) zugegeben. In dieser Formel (I) bedeutet R¹ einen synthetischen Alkylrest mit 12 bis 14 C-Atomen, n die Zahl 3 und M⁺ ein Natriumion (NW-Wert 75 s). Es wird 1 Stunde bei 60 °C gerührt, danach das Pigment abgesaugt, mit Wasser neutral und salzfrei gewaschen und bei 80 °C getrocknet.
Man erhält 131,2 Teile einer Pigmentpräparation, die in PVC transparente und farbstarke Ausfärbungen liefert. Die Dispergierbarkeit und die Ausblutechtheit sind gut.

### Beispiel 10

In einem Rührgefäß wird eine Suspension aus 370,4 Teilen Natronlauge 10 %ig, 36,5 Teilen Ethanol und 33,8 Teilen Pigment (C.I. Pigment Violet 19, β-Phase), hergestellt nach den Angaben der DE-A-1 150 046, vorgelegt, zum Sieden erhitzt und 2 Stunden bei Siedetemperatur gerührt. Danach wird auf 60 °C abgekühlt und in diese Suspension nacheinander 2,93 Teile einer wäßrigen Lösung des Natriumsalzes eines Schwefelsäurehalbesters (Wirkstoffgehalt 28 %) der allgemeinen Formel (I), in welcher R¹ einen synthetischen Alkylrest mit 12 bis 14 C-Atomen, n die Zahl 3 und M⁺ ein Natriumion (NW-Wert 75 s) bedeutet und 1,69 Teile Pigmentdispergator der allgemeinen Formel (VI), in der P für den Chinacridonrest steht, X die Gruppe (VIII) ist, worin R¹⁰ ein Wasserstoffatom und R¹¹ und R¹² jeweils eine Methylgruppe bedeuten, p die Zahl 3 und o die Zahl 2 ist, zugegeben. Es wird 1 Stunde bei 60 °C gerührt, abgesaugt, mit Wasser neutral und salzfrei gewaschen und bei 80 °C getrocknet.
Man erhält 36,3 Teile Pigmentzubereitung, die im AM-Lack transparente und farbstarke Lackierungen liefert. Die Viskosität beträgt 2,9 s und die Rheologie wird mit 5 bewertet. Der Glanz beträgt 81.

### Beispiel 11

In einem Rührgefäß werden 600 Teile Wasser vorgelegt und 50 Teile Pigment (2,9-Dimethylchinacridon), hergestellt gemäß der DE-PS 1 261 106, in Form des feuchten Filterkuchens eingetragen und suspendiert. Danach wird auf 60 °C geheizt und bei dieser Temperatur 4,5 Teile einer wäßrigen Lösung des Natriumsalzes eines Schwefelsäurehalbesters (Wirkstoffgehalt 28 %) der allgemeinen Formel (I) zugegeben. In dieser Formel (I) bedeutet R¹ einen synthetischen Alkylrest mit 12 bis 14 C-Atomen, n die Zahl 3 und M⁺ ein Natriumion (NW-Wert 75 s). Es wird 2 Stunden bei 60 °C gerührt, danach durch Zugabe von 7,6 Teilen 10 %iger Salzsäure auf pH 2 gestellt, 1 Stunde bei 60 °C gerührt, abgesaugt, mit Wasser neutral und salzfrei gewaschen und bei 80 °C getrocknet.
Man erhält 49,9 Teile einer Pigmentpräparation, die im AM-Lack transparente und farbstarke Lackierungen liefert.

### Beispiel 12

In einem Rührgefäß werden 375 Teile Wasser vorgelegt und 50 Teile Pigment (C.I. Pigment Violet 19, γ-Phase), hergestellt gemäß der DE-PS 1 184 881, in Form des feuchten Filterkuchens eingetragen und suspendiert. Danach werden 4,5 Teile einer wäßrigen Lösung des Natriumsalzes eines Schwefelsäurehalbesters (Wirkstoffgehalt 28 %) der allgemeinen Formel (I) zugegeben. In dieser Formel (I) bedeutet R¹ einen synthetischen Alkylrest mit 12 bis 14 C-Atomen, n die Zahl 3 und M⁺ ein Natriumion (NW-Wert 75 s). Es wird 30 Minuten bei 25 °C gerührt, danach durch Zugabe von 27 Teilen 10 %iger Salzsäure auf pH 2 gestellt, 1 Stunde bei 25 °C gerührt, abgesaugt, mit Wasser neutral und salzfrei gewaschen und bei 80 °C getrocknet.
Man erhält 51,3 Teile einer Pigmentpräparation, die im AM-Lack transparente und farbstarke Lackierungen liefert. Die Viskosität beträgt 4,5 s und die Rheologie wird mit 5 bewertet.

## Patentansprüche

1. Pigmentpräparation oder Pigmentzubereitung, bestehend im wesentlichen aus
a) einem Pigment aus der Klasse der Chinacridone oder Dioxazine;
b) einem oder mehreren der Schwefelsäurehalbester der allgemeinen Formel (I) und/oder (II)
R¹-O-(CH₂O)ₙ-SO₃⁻ M⁺ (I)
R¹-CO-NR²-(CH₂O)₍ₙ₊₁₎-SO₃⁻ M⁺ (II)
in welchen
R¹ eine geradkettige oder verzweigte Alkylgruppe mit 10 bis 24 C-Atomen,
R² ein Wasserstoffatom oder eine C₁-C₆-Alkylgruppe darstellt,
M⁺ ein Wasserstoff-, Alkali-, ½ Erdalkalimetall- oder ein Ammoniumion der Formel N⁺R³R⁴R⁵R⁶ bedeutet, wobei die Substituenten R³, R⁴, R⁵ und R⁶ unabhängig voneinander jeweils Wasserstoffatome oder C₁-C₆-Alkylgruppen sind, worin die Alkylgruppen durch 1 bis 3 Hydroxygruppen substituiert sein können, und
n eine Zahl von 0 bis 4 ist; und
c) gegebenenfalls einem Pigmentdispergator der allgemeinen Formel (VI)
P - [X]ₘ (VI)
in welcher
P für einen m-wertigen Rest eines Pigments auf Basis eines Chinacridons oder Dioxazins steht,
m eine Zahl von 1 bis 4 ist, und
X eine Gruppe der Formel (VII) 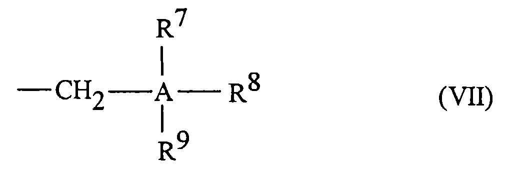 darstellt, worin A einen fünf- oder sechsgliedrigen aromatischen, gegebenenfalls kondensierten Heterocyclus darstellt, welcher 1 bis 3 gleiche oder unterschiedliche Heteroatome aus der Reihe Stickstoff, Sauerstoff und/oder Schwefel enthält, und der Heterocyclus über ein Kohlenstoffatom an die Methylengruppe gebunden ist, R⁷ und R⁸ ein Wasserstoffatom, eine C₁-C₄-Alkyl-, eine C₂-C₄-Alkenyl- oder eine Arylgruppe, bedeuten, wobei R⁷ und R⁸ gemeinsam auch einen aliphatischen oder aromatischen Ring bilden können, R⁹ ein Wasserstoffatom, eine C₁-C₄-Alkyl-, eine C₁-C₃-Hydroxyalkyl- oder eine C₂-C₄-Alkenylgruppe bedeutet, oder worin
X eine Gruppe der Formel (VIII) 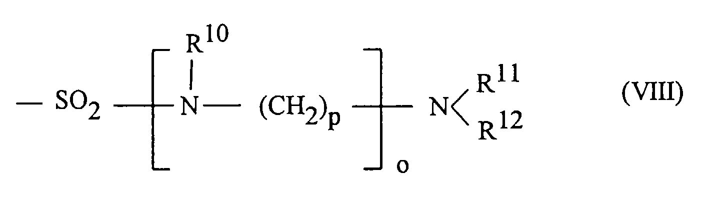 darstellt, worin R¹¹ und R¹² unabhängig voneinander jeweils ein Wasserstoffatom, eine C₁-C₂₀-Alkyl-, C₂-C₂₀-Alkenylgruppe oder eine C₅-C₇- Cycloalkylgruppe sind, oder worin R¹¹ und R¹² gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff und/oder Schwefel, R¹⁰ ein Wasserstoffatom oder eine C₁-C₄-Alkylgruppe ist,
p eine Zahl von 1 bis 6 und
o die Zahlt 1 oder 2 ist.

2. Pigmentpräparation oder Pigmentzubereitung nach Anspruch 1, dadurch gekennzeichnet, daß R¹ ein Alkylrest mit 10 bis 16 Kohlenstoffatomen, M⁺ ein Natriumion oder Wasserstoffion und n eine Zahl von 2 bis 3 ist.

3. Pigmentpräparation oder Pigmentzubereitung nach Anspruch 1 oder 2, dadurch gekennzeichnet, daß im Pigmentdispergator der Formel (VI) X eine Gruppe der Formel (VII), worin A Imidazolyl oder Indolyl bedeutet, oder X eine Gruppe der Formel (VIII), worin R¹¹ und R¹² gemeinsam mit dem angrenzenden Stickstoffatom einen Morpholinyl- oder Pyrrolidinyl-Rest bilden, ist.

4. Pigmentpräparation oder Pigmentzubereitung nach mindestens einem der Ansprüche 1 bis 3, dadurch gekennzeichnet, daß die Pigmente C.I. Pigment Violet 23, C.I. Pigment Violet 37, C.I. Pigment Violet 19, 2,9-Dimethylchinacridon, 1,8-Dichlorchinacridon, 2,9-Dichlorchinacridon, 3,10-Dichlorchinacridon oder 2,9-Di-N-methylcarbonamidochinacridon sind.

5. Pigmentpräparation oder Pigmentzubereitung gemäß einem oder mehreren der Ansprüche 1 bis 4, bestehend im wesentlichen aus
a) 90 bis 99,9 Gew.-%, vorzugsweise 99,5 bis 90 Gew.-%, eines Pigments aus der Klasse der Chinacridone oder Dioxazine,
b) 0,1 bis 5 Gew.-%, vorzugsweise 0,5 bis 2,5 Gew.-%, eines oder mehrerer Schwefelsäurehalbester der allgemeinen Formeln (I) und/oder (II) und
c) 0 bis 9,9 Gew.-%, vorzugsweise 0,5 bis 5 Gew.-%, eines Pigmentdispergators der allgemeinen Formel (VI).

6. Verfahren zur Herstellung einer Pigmentpräparation oder Pigmentzubereitung nach mindestens einem der Ansprüche 1 bis 5, dadurch gekennzeichnet, daß man einen oder mehrere Schwefelsäurehalbester der Formel (I) und/oder (II) in einer Menge von 0,1 bis 5 Gew.-%, bezogen auf trockenes Pigment, und 0 bis 9,9 Gew.-% eines Pigmentdispergators der allgemeinen Formel (VI) zugibt.

7. Verfahren nach Anspruch 6, dadurch gekennzeichnet, daß man die Schwefelsäurehalbester unmittelbar vor oder nach einem Finish zugibt.

8. Verwendung einer Pigmentpräparation oder Pigmentzubereitung gemäß mindestens einem der Ansprüche 1 bis 5 als Farbmittel zum Pigmentieren von Lacken, Druckfarben, Kunststoffen und für den Textildruck.

9. Verwendung von Schwefelsäurehalbestern der allgemeinen Formeln (I) und (II) gemäß einem oder mehreren der Ansprüche 1 bis 5 zur Herstellung von oberflächenbehandelten Pigmenten aus der Klasse der Chinacridone und Dioxazine.
